Europäisches Patentamt

European Patent Office

Office européen des brevets

(11) Veröffentlichungsnummer: **0 193 104**
**A2**

(12) **EUROPÄISCHE PATENTANMELDUNG**

(21) Anmeldenummer: **86102168.1**

(22) Anmeldetag: **19.02.86**

(51) Int. Cl.⁴: **G06F 13/28**

(30) Priorität: **25.02.85 US 705456**

(43) Veröffentlichungstag der Anmeldung:
**03.09.86 Patentblatt 86/36**

(84) Benannte Vertragsstaaten:
**CH DE FR GB IT LI NL SE**

(71) Anmelder: **International Standard Electric Corporation**
**320 Park Avenue**
**New York New York 10022(US)**

(72) Erfinder: **Gerety, Eugene Peter**
**18 Longmeadow Drive**
**Wolcott, CT 06716(US)**
Erfinder: **Vij, Jitender Kumar**
**353 Putting Green Road**
**Trumbull, CT 06611(US)**

(74) Vertreter: **Villinger, Bernhard, Dipl.-Ing. et al**
**Standard Elektrik Lorenz AG Patent- und Lizenzwesen Postfach 300 929 Kurze Strasse 8 D-7000 Stuttgart 30(DE)**

(54) **Datenaustauschsteuerung.**

(57) Ein peripheres Endgerät (20) ist über eine DMA-Steuerung (16) zum Datenaustauschen mit einem einen Mikrocomputer (18) zugeordneten Speicher (22) verbunden.

Zum Entlasten des Mikrocomputers (18) wird eine Einrichtung (10) vorgeschlagen, die eine Geräteanschlußschaltung (12) und eine Gerätesohnittstelle (14) enthält.

Die Geräteschnittstelle (14) ist einerseits über einen Bus mit der DMA-Steuerung (16) und andererseits mit der Geräteanschlußschaltung (12) verbunden. Ferner ist die Geräteanschlußschaltung (12) zum Übertragen der auszutauschenden Daten mit dem Speicher (22) und zum Austauschen von Steuerinformationen über Unterbrechungsanforderungs-und Kanalabrufleitungen mit dem Mikrocomputer (18) verbunden.

FIG. 1

EP 0 193 104 A2

Datenaustauschsteuerung

Die Erfindung betrifft eine Einrichtung zum Ausführen eines Datenaustausches zwischen einem peripheren Endgerät und einem mit einem Mikrocomputer verbundenen Speicher, wobei dem peripheren Endgerät eine Direktspeicherzugriffssteuerunq zugeordnet ist.

Beim Austausch von Daten besteht eine Hauptaufgabe darin, die Vielzahl von peripheren Endgeräten richtig ansteuern zu können. Diese Aufgabe stellt sich nicht nur wegen der großen Anzahl unterschiedlicher Endgeräte, wie Drucker, Eingabetastaturen usw., sondern auch wegen der unterschiedlichen Arbeitsgeschwindigkeiten und unterschiedlicher Herstellspezifikationen. Weiter sind die meisten Mikroprozessoren nicht in der Lage einen direkten Datenaustausch mit einem peripheren Endgerät durchzuführen. Sie benötigen hierzu eine entsprechende Schnittstellenschaltung, um einen Datenaustausch zu ermöglichen. Eine übliche Lösung besteht darin eine Schnittstellenschaltung vorzusehen, die einen Befehlsatz enthält, d.h. ein einem speziellen Endgerät zugeordnetes Steuerprogramm. Zusätzlich ist ein Direktzugriffsspeicher zwischen der Schnittstellenschaltung und dem Mikroprozessor erforderlich. Im Betrieb überträgt der Mikroprozessor ein Informationsbit in den Direktzugriffsspeicher und dann zur Schnittstellenschaltung. Das Endgerät wird nun mit dem speziellen Programm angesteuert, um die Information zu erhalten. Nach erfolgtem Informationsaustausch schaltet die Schnittstellenschaltung den Direktzugriffsspeicher in den Ruhezustand, um die nächste zu übertragende Information aufnehmen zu können. Dieser Übertragungsablauf ist sehr langsam und unwirtschaftlich.

Weitere Systeme enthalten erweiterte Register, in die größere Informationsmengen geladen werden können, die sodann über die Schnittstellenschaltung zum Endgerät übertragen werden. Dies ergibt im wesentlichen einen Zeitgewinn zwischen zwei Unterbrechungsanforderungen vom Speicher zum Mikroprozessor.

Weiterhin müssen die meisten Systeme zusätzlich Informationen zwischen dem Mikroprozessor und dem Direktzugriffsspeicher über einen internen Bus austauschen, über den auch die zu übertragenden Informationen gesendet werden. Somit besteht für den Mikroprozessor keine zufriedenstellende Zugriffsmöglichkeit auf den internen Bus, um eine Steuerung von mehr als einem Endgerät gleichzeitig durchführen zu können.

Eine Lösung dieses Problems besteht darin, einen weiteren Befehlsatz unabhängig vom Mikroprozessor für die Schnittstellenschaltung vorzusehen. Dadurch werden einige ursprünglich dem Mikroprozessor zugeordnete Funktionen umverteilt und die Geschwindigkeit erhöht. Durch den zusätzlichen Befehlssatz, der normalerweise im Direktzugriffsspeicher abgelegt wird, wird dessen Kapazität verringert, wodurch die Datendurchsatzrate ebenfalls verringert wird.

Ein weiterer zu berücksichtigender Punkt von üblichen Schnittstellenschaltungen ist der, daß spezifische Steuerbefehle für jedes periphere Endgerät benötigt werden. Legt man ein entsprechendes spezifisches Programm für die Endgeräte im Direktzugriffsspeicher ab, wird der Mikroprozessor weiter entlastet. Natürlich wird die Speicherkapazität des Direktzugriffsspeichers dadurch weiterhin erheblich reduziert. Somit wird die Anzahl der gleichzeitig anschließbaren Endgeräte durch vier nachteilige Zustände bestimmt. Dies sind Buswartezeit, Busbelegungszeit, Unterbrechungswartezeit und Unterbrechungsausführungszeit.

Die Buswartezeit ergibt sich aufgrund kritischer Antwortbedingungen einiger Endgeräte. Dies wird häufig durch eine Doppelzwischenspeicherung mittels eines Fifospeichersystems gelöst, ist jedoch aufwendig und teuer.

Die Busbelegungszeit steigt dann an, wenn die Menge der auszutauschenden Informationen ansteigen, so daß ein wesentlicher Teil der Busbandbreite benötigt wird, wodurch die Rechnerkapazität des Mikroprozessor verringert wird. Eine Lösung dieses Problems besteht darin, die Belastung durch den Informationsaustausch auf mehrere Mikroprozessoren zu verteilen sowie schnellere Mikroprozessoren einzuführen. Beide Lösungen sind sehr teuer.

Unterbrechungswartezeit entsteht beim Ausführen eines vollständigen Informationsaustausches zwischen der Schnittstellenschaltung und einem Endgerät, bei gleichzeitiger Unterbrechungsanforderung für weitere Daten, Befehle usw. Die Zeit, die der Mikroprozessor benötigt auf eine solche Unterbrechungsanforderung zu antworten, kann unter Umständen kritisch sein. Obwohl heutige Mikroprozessoren sehr schnell antworten können, verursacht eine häufige Unterbrechungsanforderung Verzögerungen, wobei der Mikroprozessor schnell überlastet wird.

Die Unterbrechungsausführungszeit hängt mit der Unterbrechungswartezeit zusammen. Sogar eine Unterbrechungszeit von nur einer Millisekunde stellt noch eine sehr langsame Antwort dar. Die Unterbrechungszeit von z.B. minimal einer Millisekunde stammt daher, daß nach dem der Mikroprozessor eine Unterbrechungsanforderung beantwortet hat, diese Anfrage noch ausgeführt werden muß.

Die technische Aufgabe nach der Erfindung besteht darin, eine Einrichtung zum Ausführen eines Datenaustausches zwischen einem peripheren Endgerät und einem einem Mikrocomputer zugeordneten Speicher zu realisieren, die den Mikrocomputer wesentlich entlastet.

Eine Lösung dieser Aufgabe erfolgt mit den in Anspruch 1 angegebenen Mitteln.

Weitere vorteilhafte Ausgestaltungen des Gegenstandes der Erfindung sind den Unteransprüchen zu entnehmen.

Ein Ausführungsbeispiel wird im folgenden anhand der Zeichnungen erläutert. Es zeigen:

Figur 1 ein Blockschaltbild einer Anordnung, das die Grundzüge der Erfindung enthält,

Figur 2 ein detailliertes Blockschaltbild der Geräteanschlußschaltung nach Figur 1,

Figur 3 ein detailliertes Blockschaltbild der Geräteschnittstelle nach Figur 1,

Figur 4 ein Blockschaltbild einer Anordnung für einen Modembetrieb nach der erfindungsgemäßen Einrichtung, ein Blockschaltbild einer Anordnung für ein Mehrkanalbetrieb nach der erfindungsgemäßen Einrichtung und

Figur 6 ein Blockschaltbild einer weiteren Anordnung für ein Mehrkanalbetrieb nach der erfindungsgemäßen Einrichtung.

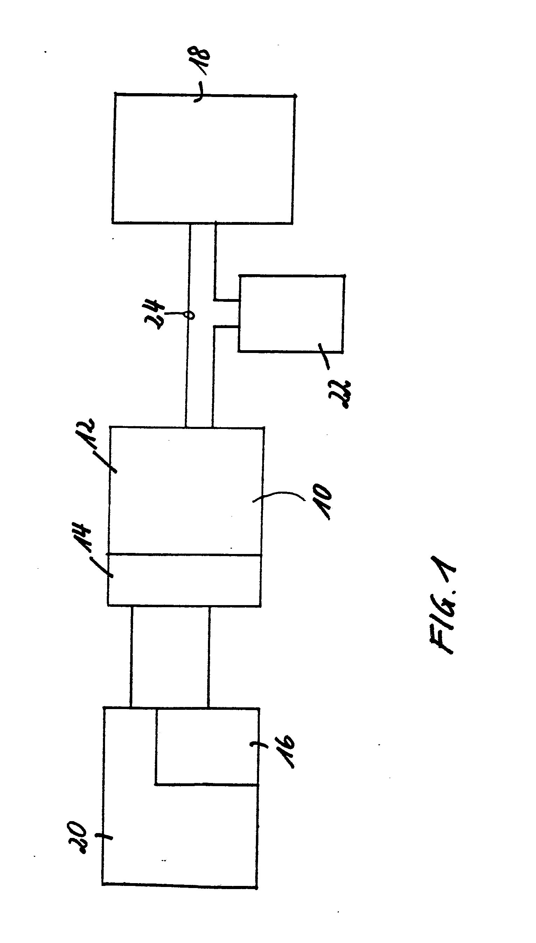

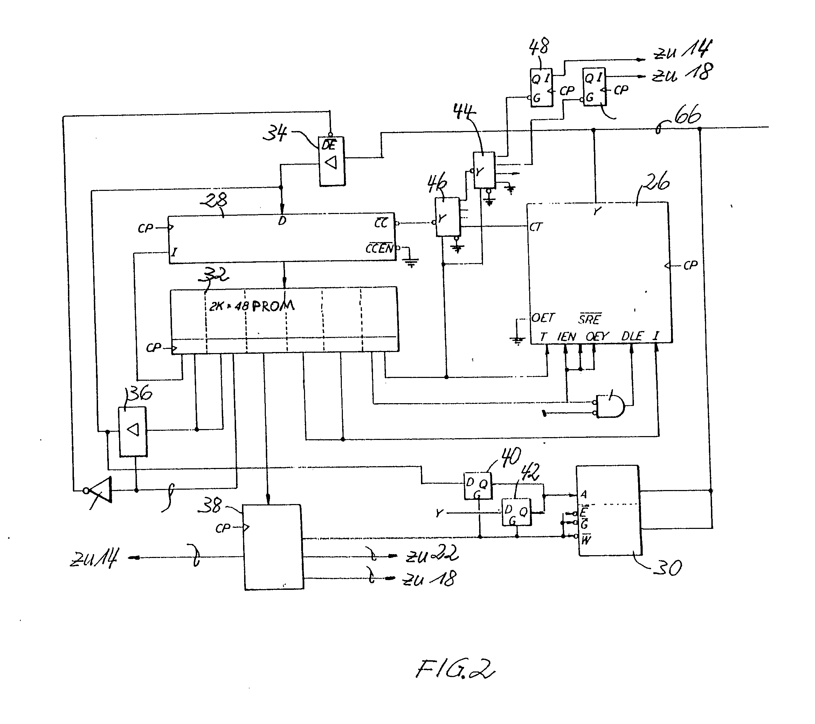

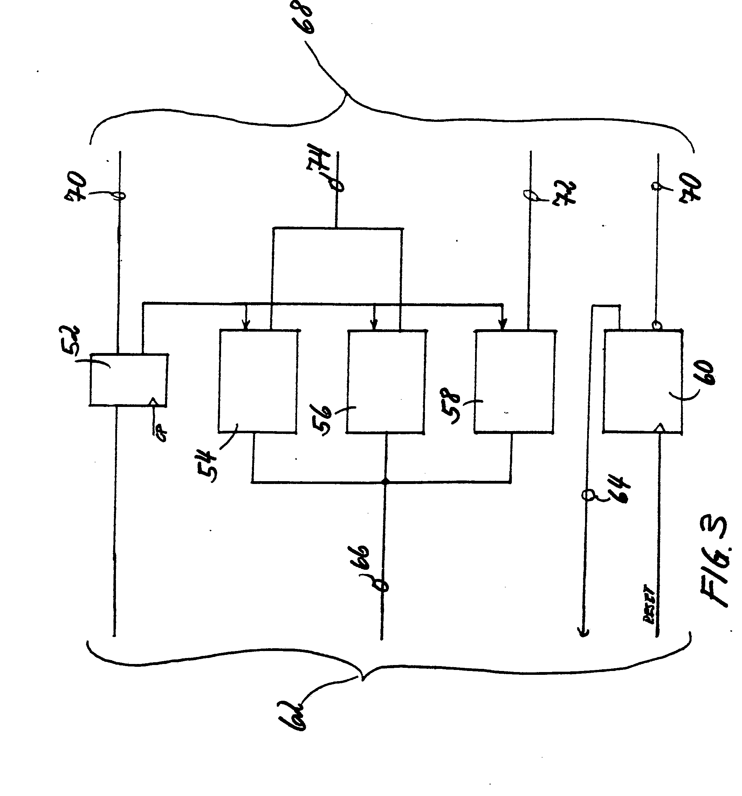

Eine Einrichtung, in Figur 1 allgemein mit 10 bezeichnet, enthält eine Geräteanschlußschaltung 12 und eine Geräteschnittstelle 14. Die Einrichtung 10 ist so angeordnet, daß eine übliche Signalisierung zwischen einer Direktspeicherzugriffssteuerung 16 -im folgenden DMA-Steuerung 16 genannt -und einem zugeordneten Mikrocomputer 18 über sie abläuft.

Die DMA-Steuerung ist ein integraler Bestandteil eines peripheren Endgerätes 20, obwohl sie nicht unbedingt im peripheren Endgerät 20 angeordnet sein muß. Obwohl nur eine DMA-Steuerung 16 gezeigt wird, können durch die selbe Einrichtung 10 und den selben Mikrocomputer 18 eine Vielzahl solcher peripherer Endgeräte 20 bedient werden.

Wie in Figur 1 gezeigt, sind die Geräteanschlußschaltung 12 und der Mikrocomputer 18 mit einem Speicher 22 verbunden . Dabei ist der Speicher 22 durch beide gleichberechtigt und unabhängig zugreifbar. Die einzige direkte Verbindung zwischen der Geräteanschlußschaltung 12 und dem Mikrocomputer 18 erfolgt über Unterbrechungsanforderungs-/Kanalabrufleitungen 24. Somit ist eine beträchtliche Anzahl von Unterbrechungsausführungen von dem Mikrocomputer 18 verlagert, da dessen interner Bus nicht direkt im wesentlichen in den Adressen-und Datenaustausch zwischen der Geräteanschlußschaltung 12 und dem Speicher 22 einbezogen ist.

Die Geräteanschlußschaltung 12, wie noch genauer in Verbindung mit Figur 2 erläutert wird, enthält eine Speichereinheit für geräteunabhängige Befehle zum Steuern der DMA-Steuerung 16 und eine Speichereinheit für gerätespezifische Befehle, entsprechend um spezifische Befehle für die zahlreichen DMA-Steuerungen 16 vorzusehen.

Wie in Figur 2 gezeigt wird, enthält die Geräteanschlußschaltung 12 ein Rechen-und Steuerwerk ALU 26, eine Mikroprogrammablaufsteuerung 28 und einen Notizblockspeicher 30. Das Rechen-und Steuerwerk 26, die Mikroprogrammablaufsteuerung 28 und der Notizblockspeicher 30 bilden einen Mikroprozessor. Zusätzlich enthält die Geräteanschlußschaltung 12 eine programmierbare Festspeicherbank 32, die einerseits die geräteunabhängigen und andererseits die gerätespezifischen Befehle enthält. Ferner enthält die Geräteanschlußschaltung 12 einen ersten und einen zweiten Tristate-Pufferspeicher 34, 36, eine Dekodier-und Signalspeicherlogik 38, ein erster und ein zweiter Adressenspeicher 40, 42, einen ersten und einen zweiten Multiplexer 44, 46 und ein erstes und ein zweites Flipflop 48, 50.

Die Geräteschnittstelle 14 der Einrichtung 10, wie in Figur 3 gezeigt, enthält ein programmierbares logisches Feld 52, einen Datenpufferspeicher 54, einen L-Adressenpufferspeicher 56, einen H-Adressenpufferspeicher 58 und ein Flipflop 60. Auf der der Geräteanschlußschaltung 12 zugeordneten Seite 62 der Geräteschnittstelle 14 ist das programmierbare logische Feld 52 und das Flipflop 60 mit der Dekodier-und Signalspeicherlogik 38 verbunden. Das Flipflop 60 ist weiterhin über eine externe Zustandsleitung 64 mit dem ersten Flipflop 48 der Geräteanschlußschaltung 12 verbunden. Das erste Flipflop 48 wird durch den Mikroprozessor zyklisch abgefragt, d.h. auf Zustandsänderungen hin überwacht. Die Pufferspeicher 54, 56 und 58 sind mit einem Adressen/Datenbus 66 der Geräteanschlußschaltung 12 verbunden.

Auf der der DMA-Steuerung 16 zugeordneten Seite 68 der Geräteschnittstelle 14 sind das programmierbare logische Feld 52 und das Flipflop 60 mit einem Steuerbus 70, der H-Adressenpufferspeicher 58 mit einem Adressenbus 72 und der Datenpufferspeicher 54 sowie die L-Adressenpufferspeicher 56 mit einem Datenbus 74 verbunden.

Eine DMA-Steuerung 16 enthält üblicherweise einen Mehrfachleitungsbus mit einer ersten Leitungsgruppe zum Übertragen von Steuersignalen, einer zweiten Leitungsgruppe zum Übertragen der H-Adressensignale und eine dritte Leitungsgruppe zum Übertragen der L-Adressensignale. Dabei bedeutet die L-Adresse eine übliche 8-Bit Adresse gemultiplext mit 8 Datenbits auf dem Datenbus 74 und die H-Adresse liegt während dem Datenaustausch auf dem Adressenbus 72 an.

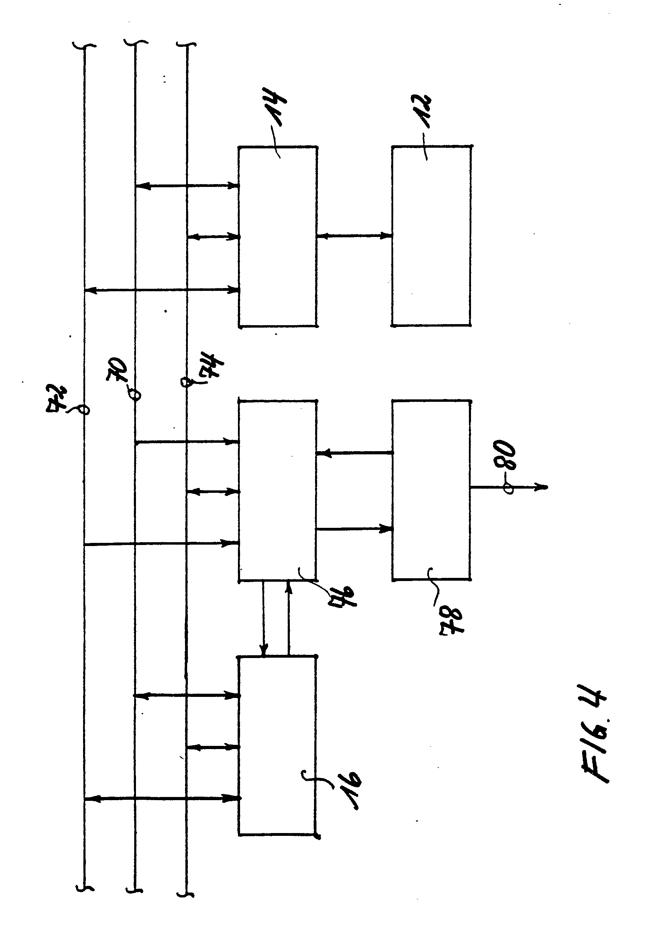

In einer ersten Ausführung, wie in Figur 4 gezeigt, ist die DMA-Steuerung 16 mit einem USART-Baustein 76 verbunden, der an ein Modem 78 zum Übertragen von Daten auf einen Fernsprechanschluß 80 angeschlossen ist. Zur Beschreibung des Betriebsablaufes dieser Ausführung wird davon ausgegangen, daß die DMA-Steuerung 16 einen Datenaustausch startet. Die DMA-Steuerung 16 legt zuerst die L-Adresse/Daten auf den Datenbus 74 und die H-Adresse auf den Adressenbus 72. Nachdem die Geräteschnittstelle 14 diesen Versuch zum Übertragen erkannt hat, veranlaßt sie drei Abläufe: erstens sendet die Geräteschnittstelle 14 aus dem programmierbaren logischen Feld 52 ein "nicht bereit"-Signal über den Steuerbus 70 zur DMA-Steuerung 16, wodurch die DMA-Steuerung 16 gezwungen wird ihren momentanen Zustand beizubehalten; zweitens sendet die Geräteschnittstelle 14 über das Flipflop 60 ein Unterbrechungssignal zur Geräteanschlußschaltung 12, um den gerade anliegenden externen Zustand anzuzeigen; und drittens wird die Adresse in die Pufferspeicher für die L-Adressen 56 und die H-Adressen 58 sowie die mit der L-Adresse gemultiplexten Daten in den Datenpufferspeicher 54 zwischengespeichert. Selbstverständlich hängen die Abläufe im programmierbaren logischen Feld 52 von der jeweiligen DMA-Steuerung 16, mit der die Geräteschnittstelle 14 verbunden ist, ab.

Die Multiplexer 44, 46 erkennen am ersten Flipflop 48 den Wechsel eines externen Zustandes, wodurch die Steuerung über die DMA-Steuerung 16 gemäß den in der programmierbaren Festspeicherbank 32 abgelegten Befehle durch die Mikroprogrammablaufsteuerung 28 und das Rechen-und Steuerwerk 26 abläuft. Die Geräteanschlußschaltung 12 untersucht die Adresse und legt sodann fest, entsprechend den abgelegten gerätespezifischen Befehlen in der Festspeicherbank 32, was mit den Daten zu tun ist und signalisiert so dann der DMA-Steuerung 16, daß sie ihren Datenaustausch vollständig ausführen kann. Dabei arbeitet die DMA-Steuerung 16 so, als ob sie direkt mit dem Mikrocomputer 18 verbunden wäre. Da jedoch die Geräteanschlußschaltung 12 die Steuerung über die DMA-Steuerung 16 ausübt, ist der Mikrocomputer von dem Erfordernis des direkten und schnellen Bedienens der DMA-Steuerung 16 entlastet. Obwohl die Einrichtung 10 im wesentlichen die Steuerung für die DMA-Steuerung durchführt, ist tatsächlich nicht die Einrichtung 10, sondern der Mikrocomputer 18 für die Steuerung zuständig, was jedoch von der DMA-Steuerung 16 nicht erkannt wird.

Die Anordnung gemäß Figur 4 benötigt relativ wenig Harware um effektiv die Belastung des internen Busses des Mikrocomputers 18 durch die DMA-Steuerung 16 zu beseitigen. Allderings ist es erforderlich, daß die Geräteanschlußschaltung 12 schnell auf alle Datenübertragungen der DMA-Steuerung 16 antwortet, da der Datenpufferspeicher 54 der Geräteschnittstelle 14 nicht genügend Kapazität hat, um mehr als ein DMA-Datenaustausch eines Kanales abzuspeichern. Somit muß die Geräteanschlußschaltung 12, um Datenverluste zu vermeiden, alle für die DMA-Steuerung 16 notwendigen Operationen ausführen, bevor ein zweiter DMA-Datenaustausch eines anderen Kanales der DMA-Steuerung 16 auftritt.

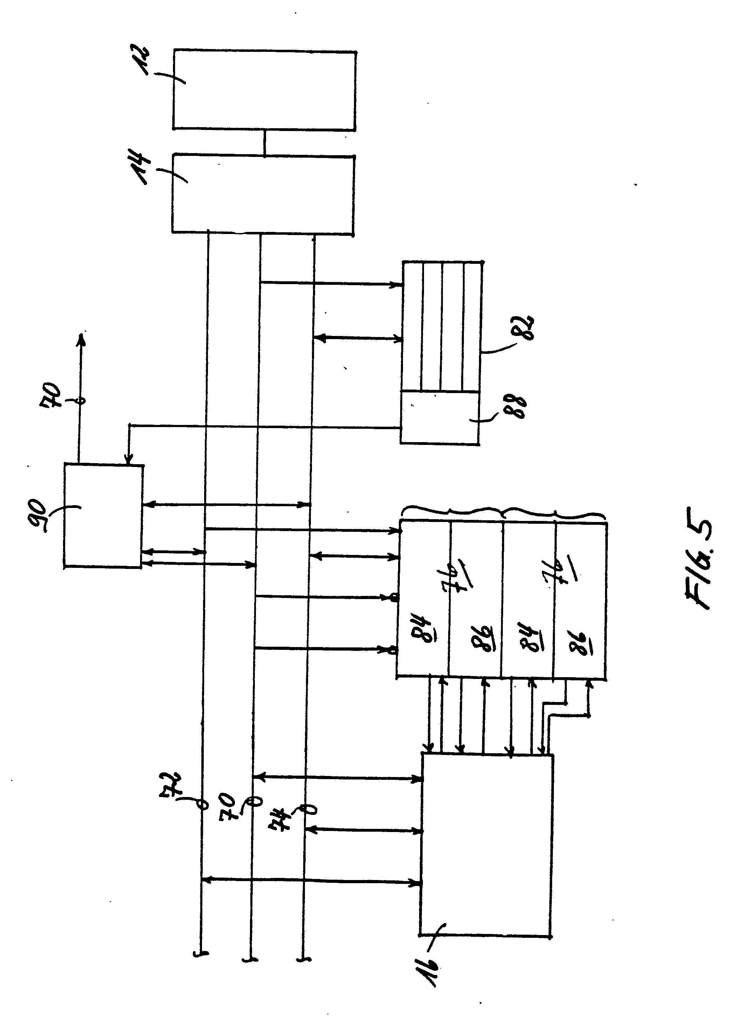

In einer zweiten Ausführung, wie in Figur 5 gezeigt, ist ein Mehrkanal-Zwischenspeicher 82 zwischen der DMA-Steuerung 16 und der Geräteanschlußschaltung 12 vorgesehen, um die schnelle Antworterfordernis für die Geräteanschlußschaltung 12 zu vermindern. Hierzu ist die DMA-Steuerung 16 mit einem Paar von USART-Bausteinen 76 verbunden, wobei ein bidirektionaler Nachrichtenaustausch mit jedem Empfangs- und Sendeteil 84, 86 der USART-Bausteine 76 stattfinden kann.

Zusätzlich ist ein Kanalwähler 88 vorgesehen, um ein richtiges Abspeichern der Adressen, die den Daten in den einzelnen Kanälen des Mehrkanal-Zwischenspeichers 82 zugeordnet sind, zu gewährleisten. Der Kanalwähler 88 legt ein Signal an eines einer Vielzahl von Unterbrechungsflipflops 90 an, das ein Unterbrechungssignal zur Geräteschlußschaltung 12 sendet, wenn entsprechend in einem der Kanäle des Mehrkanal-Zwischenspeichers 82 Daten eingeschrieben werden.

Im Betrieb erzeugt die Geräteanschlußschaltung 12 für die DMA-Steuerung 16 Adressen, die einem der Kanäle des Mehrkanal-Zwischenspeichers 82 entsprechen. Unter Benutzung dieser Adressen führt die DMA-Steuerung 16 tatsächlich einen vollständigen DMA-Datenaustausch mit dem Mehrkanal-Zwischenspeicher 82 durch. Das Einschreiben von Daten verursacht, daß durch den Kanalwähler 88 eines der Unterbrechungsflipflops 90 gesetzt wird. Wenn einer der Unterbrechungsflipflops 90 gesetzt ist, wird ein Signal an das Flipflop 60 der Geräteschnittstelle 14 angelegt. Wie bereits beschrieben, verursacht das Flipflop 60, als Antwort auf ein externes Signal zum DMA-Datenaustausch, daß das Flipflop 48 der Geräteanschlußschaltung 12 seinen Zustand wechselt. Der Zustand dieses Flipflops 48 wird durch den Mikroprozessor überwacht. Sodann frägt die Geräteanschlußschaltung 12 über die Geräteschnittstelle 14 die Unterbrechungsflipflops 90 ab, um den Kanal oder die Kanäle auszulesen, die DMA-Daten beinhalten. Die Geräteanschlußschaltung 12 führt dann den DMA-Datenaustausch entsprechend dem Mikroprogramm der Festspeicherbank 32 durch und sieht sodann für die DMA-Steuerung 16 für den abgearbeiteten Kanal eine neue Adresse vor. Zusätzlich erhält der Kanalwähler 88 diese neue Adresse, so daß, falls diese Adresse durch die DMA-Steuerung 16 genannt wird, durch den Kanalwähler 88 der entsprechende Datenzwischenspeicherplatz des Mehrkanal-Zwischenspeichers 82 aktiviert und die DMA-Daten dort abgelegt werden können.

Der Hauptvorteil dieser Ausführung besteht darin, daß eine Vielzahl von DMA-Kanälen gleichzeitig bedient werden können und daß die Geräteanschlußschaltung 12 nur vor einem folgenden DMA-Datenaustausch auf den gleichen Kanal antworten muß.

Falls die DMA-Steuerung so ausgelegt ist, daß sie mit Quittierungssignalen arbeitet, erübrigt sich der Kanalwähler 88.

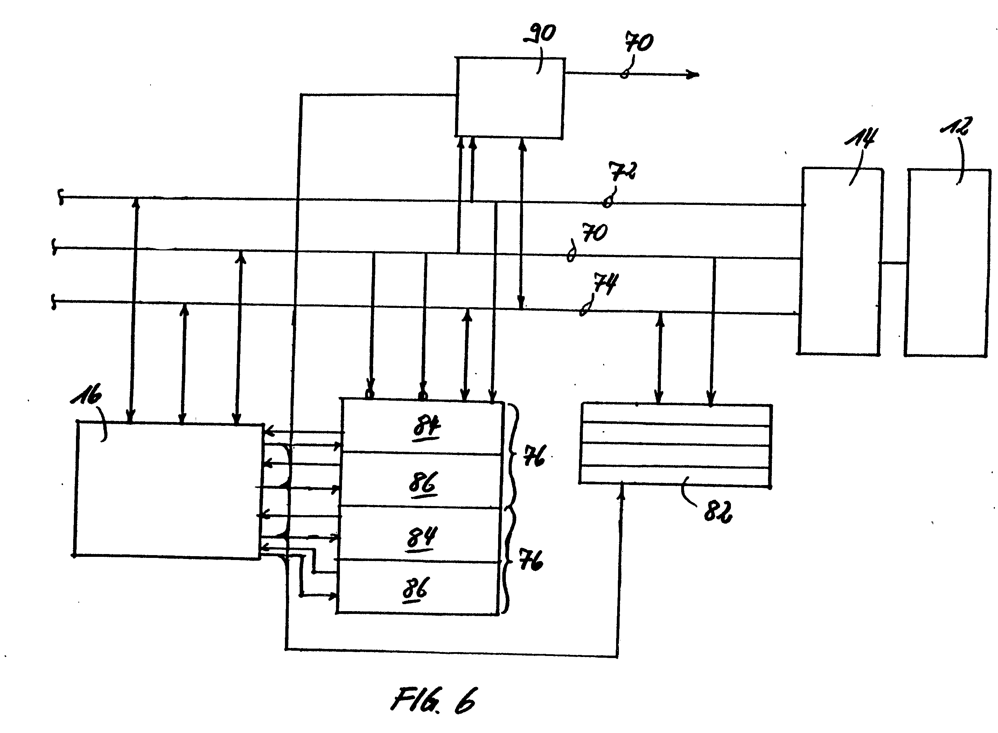

Wie in Figur 6 gezeigt, weist die DMA-Steuerung 16 eine bidirektionale Verbindung mit jedem Sendeteil 84 und jedem Empfangsteil 86 der USART-Bausteine 76 auf. Über Signalleitungen 92 werden DMA-Quittungssignale von der DMA-Steuerung 16 zu den entsprechenden Sende-oder Empfangsdaten 84, 86 gesendet. Die so durch die DMA-Steuerung 16 vorgesehene Adresse, als Antwort auf eine DMA-Anfrage von den entsprechenden Sende-oder Empfangsteilen 84, 86 der USART-Bausteine 76, wird gleichzeitig zum Mehrkanal-Zwischenspeicher 82 und zu den Unterbrechungsflipflops 90 weitergeleitet. Dadurch werden die Flipflops 90 gesetzt, die den Kanälen zugeordnet sind, die einen DMA-Datenaustausch durchführen wollen und gleichzeitig werden die entsprechenden Datenspeicherplätze im Mehrkanal-Zwischenspeicher 82 aktiviert, um die DMA-Daten aufzunehmen.

Der Vorteil dieser Ausführung besteht darin, daß die Geräteanschlußschaltung 12 von der Aufgabe enthoben ist Adressen zu erzeugen und zu dem Kanalwähler 88 und der DMA-Steuerung 16 zu senden.

Ein Vorteil der vorliegenden Einrichtung 10 besteht also darin, daß die Programme zur Steuerung von dem Speicher des steuernden Mikrocomputers entfernt werden. Somit ist der Speicher für andere Systemaufgaben maximal verfügbar. Ein weiterer großer Vorteil besteht darin, daß der steuernde Mikrocomputer 18 im wesentlichen von Unterbrechungen durch die DMA-Steuerung 16 entlastet ist. Folglich ist der Mikrocomputer im wesentlichen zum Ausführen der für ihn bestimmten Systemaufgaben frei. Dies erzeugt systemweit eine höhere Ablauf-und Verarbeitungsgeschwindigkeit.

**Ansprüche**

1. Einrichtung (10) zum Ausführen eines Datenaustausches zwischen einem peripheren Endgerät (20) und einem mit einem Mikrocomputer (18) verbundenen Speicher (22), wobei dem peripheren Endgerät (20) eine Direktspeicherzugriffssteuerung (16) zugeordnet ist, **dadurch gekennzeichnet,** daß die Einrichtung (10) eine Geräteanschlußschaltung (12) und eine Geräteschnittstelle (14) aufweist, daß die Geräteschnittstelle (14) auf der einen Seite (68) über einen Bus (70, 72, 74) mit der Direktspeicherzugriffssteuerung - (16) und auf der anderen Seite (62) mit der Geräteanschlußschaltung (12) verbunden ist, und daß die Geräteanschlußschaltung (12) zum übertragen der auszutauschenden Daten mit dem Speicher (22) und zum Austauschen von Steuerinformationen über Unterbrechungsanforderungs-und Kanalabrufleitungen (24) mit dem Mikrocomputer (18) verbunden ist.

2. Einrichtung (10) nach Anspruch 1, dadurch gekennzeichnet, daß die Geräteanschlußschaltung (12) einen Mikroprozessor (26, 28, 30) und eine programmierbare Festspeicherbank (32) aufweist, in der alle geräteunabhängigen und gerätespezifischen Befehle zum Steuern der Direktspeicherzugriffssteuerung (16) abgespeichert sind.

3. Einrichtung (10) nach Anspruch 2, dadurch gekennzeichnet, daß die Geräteschnittstelle (14) ein programmierbares logische Feld (52), ein Datenpufferspeicher (54), einen ersten Adressenpufferspeicher (56) und einen zweiten Adressenpufferspeicher (58) und ein Flipflop (60) aufweist, daß das programmierbare logische Feld (52) und das Flipflop - (60) einerseits (68) mit einem Steuerbus (70) und andererseits (62) mit dem Mikroprozessor (26, 28, 30) verbunden sind, daß der Datenpufferspeicher (54) und der erste Adressenpufferspeicher (50) sowie der zweite Adressenpufferspeicher (58) einerseits (68) mit einem Datenbus (74) bzw. einem Adressenbus (72) und andererseits (62) über einen Adressen-/Datenbus (66) mit dem Mikroprozessor (26, 28, 30) verbunden sind und daß das Flipflop (60) über eine Zustandsleitung (64) mit einem Flipflop (48) der Geräteanschlußschaltung (22) verbunden ist, das zum Erkennen einer Zustandsänderung durch den Mikroprozessor (26, 28, 30) zyklisch abgefragt wird.

4. Einrichtung (10) nach einem der vorhergehenden Ansprüche, dadurch gekennzeichnet, daß die Geräteschnittstelle (14) mit einem Mehrkanal-Zwischenspeicher (82) verbunden ist, um im Direktspeicherzugriffsbetrieb auszutauschende Daten von einer Vielzahl von Kanälen aufzunehmen.

5. Einrichtung (10) nach Anspruch 4, dadurch gekennzeichnet, daß der Mehrkanal-Zwischenspeicher (28) mit einem Kanalwähler (88) verbunden ist, in dem die Adressen zum Ansteuern der Kanäle des Mehrkanal-Zwischen-speichers (82) abgelegt sind.

6. Einrichtung (10) nach Anspruch 5, dadurch gekennzeichnet, daß jedem Kanal ein Unterbrechungsflipflop (90) zugeordnet ist, das über den Steuerbus (70) mit der Geräteschnittstelle (14) verbunden ist, und daß ein Unterbrechungsflipflop (90) dann durch die Direktspeicherzugriffssteuerung (16) gesetzt wird, wenn Daten in einen entsprechenden Kanal des Mehrkanal-Zwischenspeichers (82) eingeschrieben werden.

FIG.1

E.P. GERETY 7-7

FIG. 2

E.P. GERETY 7-7

0 193 104

E.P.GERETY 2-2

FIG. 3

FIG. 4

0 193 104

E. P. GERETY 7-7

FIG. 5

0 193 104

F P GERETY 7-7

FIG. 6

0 193 104

F. P. GERETY 7-7